# EUROPEAN PATENT APPLICATION

(11) **EP 2 461 133 A1**
(43) Date of publication of application: **06.06.2012**
(21) Application number: 10804349.8
(22) Date of filing: 26.07.2010
(51) Int. Cl.: G01C 21/00, G09B 29/00, G09B 29/10

(54) **MAP DISPLAY DEVICE**

(30) Priority: 29.07.2009 JP 2009176509
(71) Applicant: Clarion Co., Ltd., Tokyo 112-8608 (JP)
(72) Inventor: SATO, Koichi, Saitama-shi, Saitama 330-0081 (JP)
(74) Representative: MERH-IP Matias Erny Reichl Hoffmann
(86) International application number: PCT/JP2010/062498
(87) International publication number: WO 2011/013603

(57) **Abstract**

A map display device according to the present invention includes: a display monitor; a map display control means for bringing up a map with an icon displayed therein at the display monitor and scrolling the map in response to a scroll instruction; an icon detecting means for detecting an icon present in a specific area beyond a range of a display screen at the display monitor; and an indicator display control means for displaying an indicator indicating a direction along which the map should be scrolled in order to bring up on display the icon detected by the icon detecting means.

## Description

### TECHNICAL FIELD

The present invention relates to a map display device that allows a map on display to be scrolled.

### BACKGROUND ART

There is a map display device known in the related art that allows a map on display at a display monitor to be scrolled (patent literature 1).

### CITATION LIST

### PATENT LITERATURE

Patent Literature 1: Japanese Laid Open Patent Publication No. 2008-134504

### SUMMARY OF THE INVENTION

### TECHNICAL PROBLEM

The map display device in the related art disclosed in patent literature 1 allows its user to search for a specific point-of-interest facility he wishes to designate as a destination by scrolling the map on display if the particular point-of-interest facility is not present within the current range of the map on display. However, the user may not know which direction the point-of-interest facility is present on the map relative to the range of the map currently on display and, in such a case, the user, not knowing which direction he should scroll the map, needs to look for the point-of-interest facility through trial and error by scrolling the map in a random direction to see if the point-of-interest facility is located in that direction. In other words, the map display device of the related art with a map scroll function is yet to address the issue arising in the situation outlined above, i.e., a destination point-of-interest facility search performed by the user may become an unnecessarily laborious and time-consuming task.

Accordingly, an object of the present invention is to provide a map display device assuring better convenience for the user searching for a point-of-interest facility he wishes to designate as the destination by scrolling the map.

### SOLUTION TO PROBLEM

A map display device according to a first aspect of the present invention includes: a display monitor; a map display control means for bringing up a map with an icon displayed therein at the display monitor and scrolling the map in response to a scroll instruction; an icon detecting means for detecting an icon present in a specific area beyond a range of a display screen at the display monitor; and an indicator display control means for displaying an indicator indicating a direction along which the map should be scrolled in order to bring up on display the icon detected by the icon detecting means.
According to a second aspect of the present invention, in the map display device of the first aspect, the indicator display control means may change a display mode for the indicator based upon a quantity of icons detected by the icon detecting means.
According to a third aspect of the present invention, the map display device of the first or second aspect may further include a distance calculating means for calculating a distance between a position at which the icon detected by the icon detecting means is displayed on a map and a predetermined position on the map currently on display at the display monitor. In this map display device, it is preferred that the indicator display control means changes a display mode for the indicator based upon the distance calculated by the distance calculating means.
According to a fourth aspect of the present invention, in the map display device of any one of the first through third aspects, the icon detecting means may further include: a range specifying means for specifying a range for the map; and a calculating means for calculating, as the predetermined area, a difference between the range specified by the range specifying means and a map range over which the map is displayed on the display screen at the display monitor.
According to a fifth aspect of the present invention, in the map display device of any one of the first through fourth aspects, the indicator display control means may change a display mode for the indicator based upon a type of icon detected by the icon detecting means.

### ADVANTAGEOUS EFFECT OF THE INVENTION

The present invention provides a map display device assuring better convenience for the user searching for a destination point-of-interest facility by scrolling a map.

### BRIEF DESCRIPTION OF THE DRAWINGS

FIG. 1 is a block diagram showing the structure of the navigation apparatus in an embodiment of the present invention.
FIG. 2 is a flowchart for explaining the map indicator display processing in an embodiment of the present invention.
FIGS. 3(a) and 3(b) are illustrations for explaining an indicator that indicates a direction to a point-of-interest icon in the embodiment of the present invention.
FIGS. 4(a) and 4(b) are illustrations for explaining an indicator that indicates a direction to a point-of-interest icon used in the embodiment of the present invention.
FIGS. 5(a), 5(b) and 5(c) are illustrations for explaining indicators that indicate a plurality of directions to point-of-interest icons.
FIGS. 6(a) and 6(b) are illustrations for explaining indicators that indicate a direction to a plurality of point-of-interest icons.
FIGS. 7(a) and 7(b) are illustrations for explaining an indicator that indicates a direction to a point-of-interest facility icon, assuming an altered form in correspondence to the distance from the map center.
FIGS. 8(a) and 8(b) are illustrations for explaining an indicator that indicates a direction to a point-of-interest facility icon, assuming an altered form in correspondence to the distance from the map center.

### DESCRIPTION OF EMBODIMENT

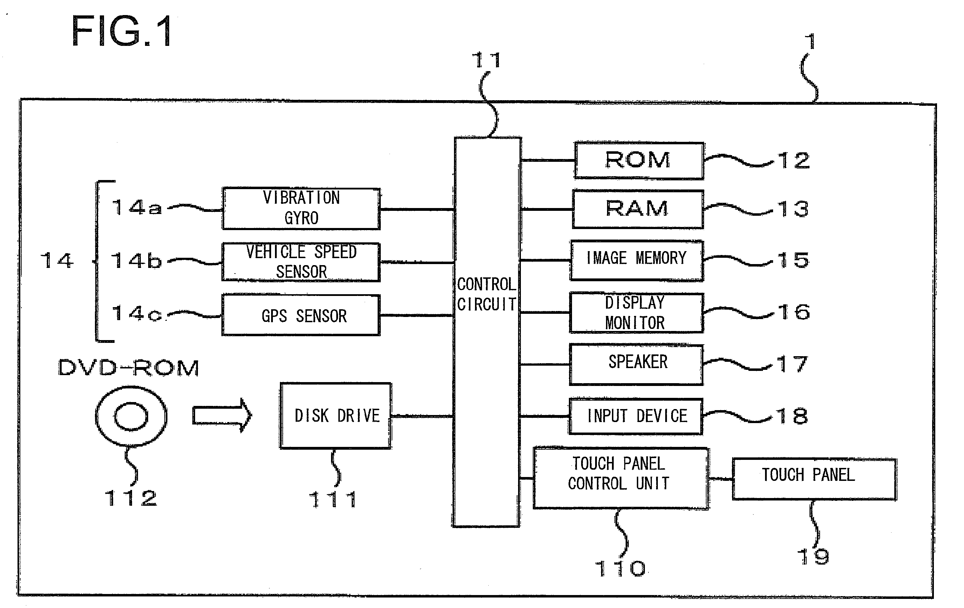

In reference to FIG. 1, the structure of a navigation apparatus 1 achieved in an embodiment of the present invention is described. The navigation apparatus 1 is capable of displaying an indicator indicating a direction to an icon that can be brought up on display at a display monitor 16 by scrolling a map. The navigation apparatus 1 includes a control circuit 11, a ROM 12, a RAM 13, a current position detection device 14, an image memory 15, the display monitor 16, a speaker 17, an input device 18, a touch panel 19 and a disk drive 111. A DVD-ROM 112 having map data stored therein is loaded in the disk drive 111.

The control circuit 11 is constituted with a microprocessor and its peripheral circuits. The control circuit 11 executes various types of control as it executes a control program stored in the ROM 12 by using the RAM 13 as a work area. The control circuit 11 executes a specific type of route search processing based upon the map data stored in the DVD-ROM 112 and brings up the route search results on display as a route at the display monitor 16.

The current position detection device 14 detects the current location of the vehicle. The current position detection device 14 is constituted with a vibration gyro 14a, a vehicle speed sensor 14b, a GPS (global positioning system) sensor 14c and the like. The vibration gyro 14a detects the direction along which the vehicle is advancing, whereas the vehicle speed sensor 14b detects the vehicle speed. The GPS sensor 14c detects the current position based upon GPS signals transmitted from GPS satellites. The current position detection device 14 detects the current location of the vehicle by using the information detected via the devices 14a through 14c. The navigation apparatus 1 determines a map display range and the like, based upon the current vehicle location detected by the current position detection device 14. In addition, the navigation apparatus 1 displays a subject vehicle position mark at the current location on the map.

In the image memory 15, image data to be displayed at the display monitor 16 are stored. These image data include road map drawing data and various types of graphics data. The image data are generated as needed based upon the map data stored in the DVD-ROM 112. The navigation apparatus 1 is able to display a map and the like at the display monitor 16 by using the image data thus generated.

The touch panel 19 is a transparent touch switch laminated over the surface of the display monitor 16. An image brought up on display at the display monitor 16 is thus viewed through the touch panel 19. In addition, as the user touches a button, a menu screen option or the like displayed at the display monitor 16 with his finger or the like, the touch panel 19 is depressed. The touch panel 19 outputs a signal corresponding to the depressed position at the touch panel 19, to a touch panel control unit 110. The touch panel control unit 110 then calculates the position at which the touch panel 19 has been depressed based upon the signal output from the touch panel 19 and outputs the calculation results to the control circuit 11. The control circuit 11, in turn, executes control so as to execute processing defined in correspondence to the specific button, menu screen option or the like having been depressed.

Furthermore, as the user touches the screen at the display monitor 16 while a map is on display at the display monitor 16, the touch panel 19 is depressed and the map is scrolled so as to shift the depressed position to the center of the map.

The disk drive 111 reads out map data from the DVD-ROM 112 loaded therein, to be used to display a map at the display monitor 16. The map data include map display data, route search data and the like. The map display data and the route search data include link information and node information related to the roads in the map data. The map display data include map data at a plurality of different scaling factors from wide range through detailed. The scaling factor of the map on display can be thus adjusted to one of the plurality of different levels in response to a user request. It is to be noted that map data may be read out from a recording medium other than the DVD ROM 112, such as a CD-ROM or a hard disk.

Various types of information, including a map of an area around the subject vehicle position and a menu page, are provided to the user as a screen display brought up at the display monitor 16. Through the speaker 17, voice messages prompting the user to perform a specific type of input operation or providing route guidance to the user are output. The input device 18, which includes operation keys operated by the user to select various command settings and the like, is constituted with button switches on an operation panel and the like.

The user is also able to set a destination by operating the input device 18 or the touch panel 19 in response to instructions provided on the display screen at the display monitor 16 or voice instructions output through the speaker 17.

Once a destination has been set by the user, a route search start point is set at the current position and a route search end point is set at the destination. Then route calculation is executed to determine a route from the start point to the end point based upon a specific algorithm. The route thus determined is indicated on the screen display at the display monitor 16 in a display mode distinguishable from other roads by, for instance, using a different display color. As a result, the user is able to identify the route determined through the route search calculation on the map on the screen display. In addition, the navigation apparatus 1 guides the vehicle along the route by indicating to the user a specific direction along which the vehicle should advance with instructions provided on the screen or with voice instructions, so that the vehicle travels along the route resulting from the search calculation.

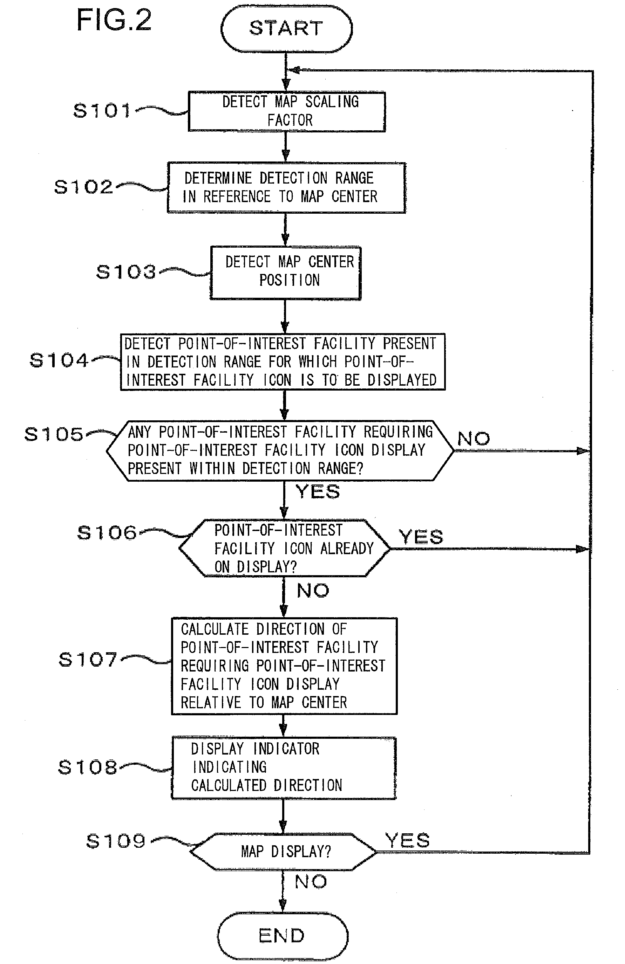

Next, in reference to the flowchart presented in FIG. 2, the map indicator display processing executed in an embodiment of the present invention is described. The processing shown in FIG. 2 is executed by the control circuit 11 based upon a program started up as the map on display at the display monitor 16 is scrolled.

In step S101, the scaling factor of the map currently on display at the display monitor 16 is detected. In step S102, a detection range is determined in reference to the center of the map on display based upon the map scaling factor having been detected in step S101. If the map on display at the display monitor 16 is a wide range map, a wide detection range is selected, whereas if a detailed map is on display at the display monitor 16, a narrow detection range is selected. The detection range is greater than the range of the map displayed on the display screen. In this embodiment, map images with a range larger than each geographical range over which the map may be displayed at the display monitor 16 are drawn and stored in the image memory 15 in advance under control executed by the control circuit 11. A map scroll function is achieved for the map on display at the display monitor 16 as the address from which a map image is read from the image memory 15 to display a map at the display monitor 16 is shifted in correspondence to the extent to which the map is scrolled, i.e., as the position of the origin point is shifted. In other words, the larger map range over which a map image is drawn and stored in the image memory 15 corresponds to the detection range in the embodiment. It is to be noted that the detection range may be determined in units of meshes, provided that the map data are managed in meshes. For instance, the mesh containing the map currently on display and various meshes surrounding the particular mesh may be designated as the detection range.

In step S103, the position of the map center is detected. In step S104, any point-of-interest facility in correspondence to which a point-of-interest facility icon should be displayed, present within the detection range set in reference to the map center having been detected in step S103, is detected. A point-of-interest facility icon is displayed to indicate the presence of a specific type of point-of-interest facility on the map. Point-of-interest facilities may be, for instance, gasoline stations, family restaurants, convenience stores, financial institutions and parking lots. Point-of-interest facility icons are each designed to indicate a specific type of point-of-interest facility. It is to be noted that if the point-of-interest facility icons indicating all types of point-of-interest facilities are to be brought up on display, the user may have trouble identifying each point-of-interest facility icon among the numerous point-of-interest facility icons crowding the limited space on the screen. This potential problem may be averted by allowing the user to set whether or not to designate each point-of-interest facility icon corresponding to a specific type of point-of-interest facility as a display target. In step S105, a decision is made as to whether or not there is any point-of-interest facility, in correspondence to which a point-of-interest facility icon should be displayed, present within the detection range. If there is any point-of-interest facility for which a point-of-interest facility icon should be displayed is present, an affirmative decision is made in step S 105, and the operation proceeds to step S 106. If, on the other hand, there is no point-of-interest facility for which a point-of-interest facility icon should be displayed is present in the detection range, a negative decision is made in step S 105 and the operation returns to step S101.

In step S 106, the range of the map currently on display at the display monitor 16 is calculated based upon the map center position and the map scaling factor and a decision is made as to whether or not the point-of-interest facility having been detected in step S 104 is already indicated by the corresponding point-of-interest facility icon at the display monitor 16. If the point-of-interest facility icon is already displayed, an affirmative decision is made in step S 106 and the operation returns to step S101. However, if the point-of-interest facility icon is not displayed yet, a negative decision is made in step S106 and the operation proceeds to step S 107. In step S 107, the direction of the point-of-interest facility having been detected, for which the point-of-interest facility icon is to be displayed, relative to the map center is calculated. Point-of-interest facility information is stored in a point-of-interest (POI) facility database. The point-of-interest facilities are sorted in correspondence to specific categories. The information stored in the database includes point-of-interest facility position information constituted with data indicating the latitude and longitude of each point-of-interest facility. Thus, the direction along which the line segment connecting the central position of the map currently on display on the monitor screen and the point-of-interest facility position extends can be calculated as the direction of the particular point-of-interest facility.

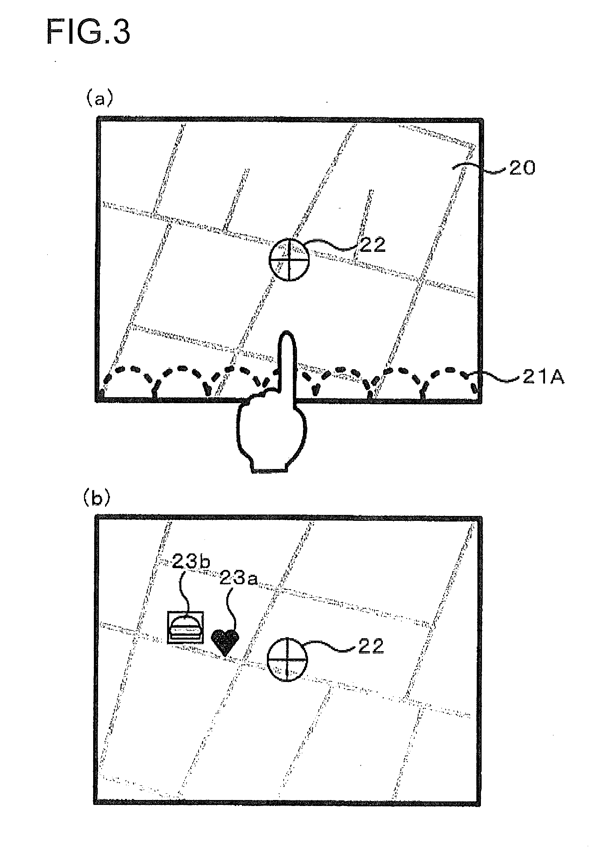

In step S108, an indicator indicating the direction calculated in step S107 is superimposed on the map on display. For instance, waves 21A may be displayed as an indicator along the bottom side of a rectangular map 20, matching the direction of the point-of-interest facility for which the point-of-interest facility icon is to be displayed, among the four sides of the map 20, as shown in FIG. 3(a). A cursor 22 is displayed at the center of the map 20. In this case, as the user scrolls up the map 20 by pressing on the map 20 as shown in FIG. 3(a), the map further on the lower side relative to the map 20 that includes point-of-interest facility icons 23a and 23b, which have not been included in the initial map 20, comes up on display, as shown in FIG. 3(b). The direction of the point-of-interest facility for which the corresponding point-of-interest facility icon is displayed in this situation matches the position of the side of the display screen that intersects the line segment.

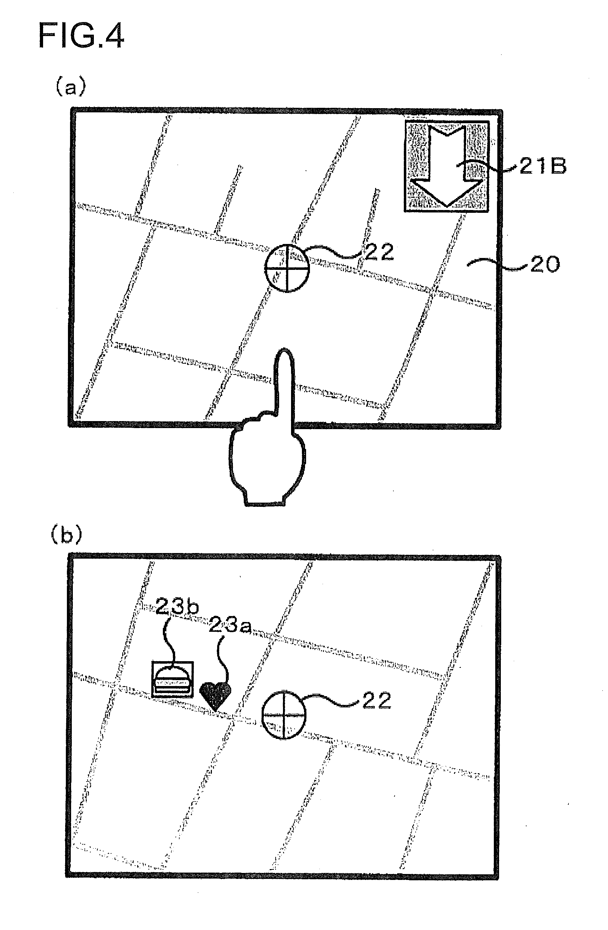

As an alternative, an arrow 21B pointing downward, which is the direction of the point-of-interest facility for which the point-of-interest facility icon is to be displayed, may be displayed as an indicator, as shown in FIG. 4(a). In this case, as the user scrolls up the map 20 by pressing on the map 20 as shown in FIG. 4(a), the map further on the lower side relative to the map 20, which includes the point-of-interest facility icons 23a and 23b that have not been included in the initial map 20, comes up on display, as shown in FIG. 4(b).

It is to be noted that an indicator other than waves or an arrow may be used, as long as the user is able to ascertain the direction of the point-of-interest facility having been detected by checking the indicator.

In step S 109 in FIG. 2, a decision is made as to whether or not the map display on the display monitor 16 is to be ended or not. If the map display is to be sustained, an affirmative decision is made in step S 109 and the operation returns to step S101. However, if the map display is to be ended, a negative decision is made in step S 109 and the indicator display processing ends.

The following advantage is achieved through the navigation apparatus 1 in the embodiment described above.
A point-of-interest facility icon present in a predetermined surrounding area, among point-of-interest facility icons that are not included in the scrolled map on display is detected and an indicator indicating the map scrolling direction in which the map needs to be scrolled in order to bring up the detected icon on display is displayed. As a result, better convenience is assured for the user searching for a point-of-interest facility he wishes to designate as the destination by scrolling the map.

The navigation apparatus 1 achieved in the embodiment described above allows for the following variations.
(1) Icons are not limited to point-of-interest facility icons in so far as they are displayed on a map.

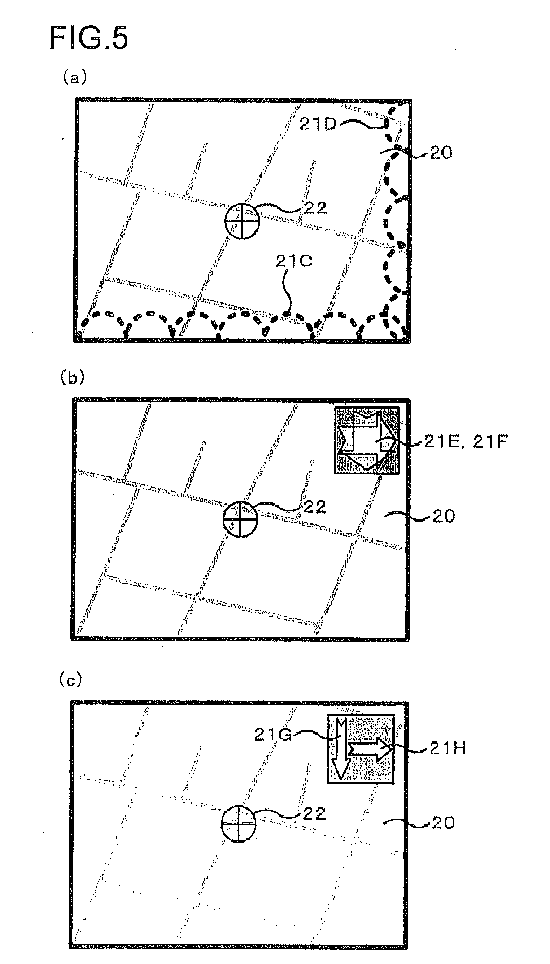

(2) If a plurality of point-of-interest facilities are detected in step S 104 in FIG. 2 and the results of the calculation executed in step S 107 indicate that the point-of-interest facilities for which point-of-interest facility icons are to be displayed, are present along a plurality of directions, a plurality of indicators, each indicating a specific direction, may be displayed. For instance, point-of-interest facilities for which point-of-interest facility icons will be displayed may be present along the downward direction and along the rightward direction relative to the map center. In such a case, waves 21C and waves 21D may be displayed as indicators along the bottom side and the right side, matching the directions of the point-of-interest facilities, among the four sides of the rectangular map 20, as shown in FIG. 5(a).

As an alternative, the plurality of directions of point-of-interest facilities for which point-of-interest facility icons are to be displayed, may be indicated by arrows. In such a case, an arrow 21E indicating the downward direction among the plurality of facility directions and an arrow 21F indicating the other facility direction, i.e., the rightward direction, may be displayed as indicators by overlaying them one on top of another on display, as shown in FIG. 5(b). Of these two indicators, the arrow 21E, superimposed over the arrow 21F, should be displayed as a semitransparent arrow so as to allow the user to see the direction indicated by the arrow 21F set under the arrow 21E. As a further alternative, a downward arrow 21G and a rightward arrow 21F may be displayed separately, as shown in FIG. 5(c).

(3) The indicator display mode for the indicator indicating the direction of point-of-interest facilities may be changed based upon the number of point-of-interest facilities detected in step S104 in FIG. 2. In this case, even better convenience is assured for the user since he is able to ascertain in advance the number of icons to come up on display as he scrolls the map.

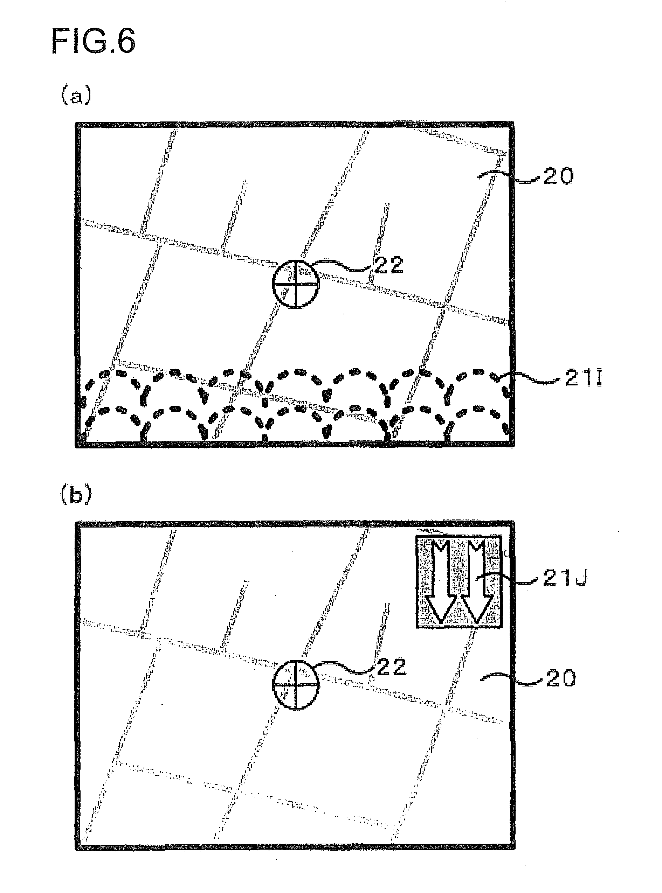

For instance, when the direction of the point-of-interest facility is indicated by waves, if the number of point-of-interest facilities is 1 to 5, a single wave row 21A may be displayed as shown in FIG. 3(a). And, if the number of point-of-interest facilities is 6 to 10, two wave rows 21I may be displayed as shown in FIG. 6(a). Furthermore, if the number of point-of-interest facilities is 11 or more, three wave rows (not shown) may be displayed.

In addition, when the direction of the point-of-interest facility is indicated by arrows, if the number of point-of-interest facilities is 1 to 5, a single arrow 21B may be displayed as shown in FIG. 4(a). And, if the number of point-of-interest facilities is 6 to 10, two arrows 21J may be displayed as shown in FIG. 6(b). Furthermore, if the number of point-of-interest facilities is 11 or more, three arrows (not shown) may be displayed.

(4) In step S 108 in FIG. 2, the distance between a specific position taken in the map currently on display, e.g., the center of the map on display, and the point-of-interest facility for which the point-of-interest facility icon is to be displayed may also be calculated so as to change the indicator display mode in correspondence to the distance thus calculated. By doing this, even better convenience is assured for the user since he is able to ascertain in advance the extent to which he should scroll the map in order to display the icon. In such a case, if there are a plurality of point-of-interest facilities for which point-of-interest facility icons are to be displayed, the indicator display mode may be adjusted in reference to the smallest value among the values representing the distances between the center of the map on display and the individual point-of-interest facilities. As an alternative, the indicator display mode may be adjusted based upon the average of the distances between the center of the map on display and the individual point-of-interest facilities.

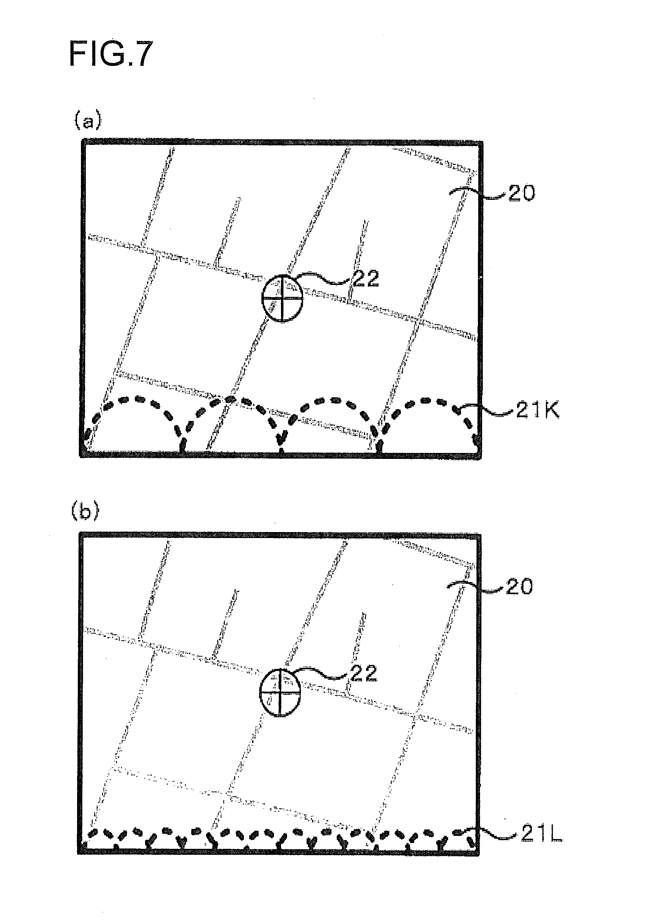

For instance, the amplitude and the wavelength of waves 21K indicating the point-of-interest facility direction may be increased, as shown in FIG. 7(a), if the distance between the map center and the point-of-interest facility is significant. If, on the other hand, the distance between the map center and the point-of-interest facility is small, the amplitude and the wavelength of waves 21L may be reduced, as shown in FIG. 7(b). It is to be noted that only the amplitude of the waves may be increased when the distance between the map center and the point-of-interest facility is significant and only the amplitude of the waves may be reduced when the distance between the map center and the point-of-interest facility is small.

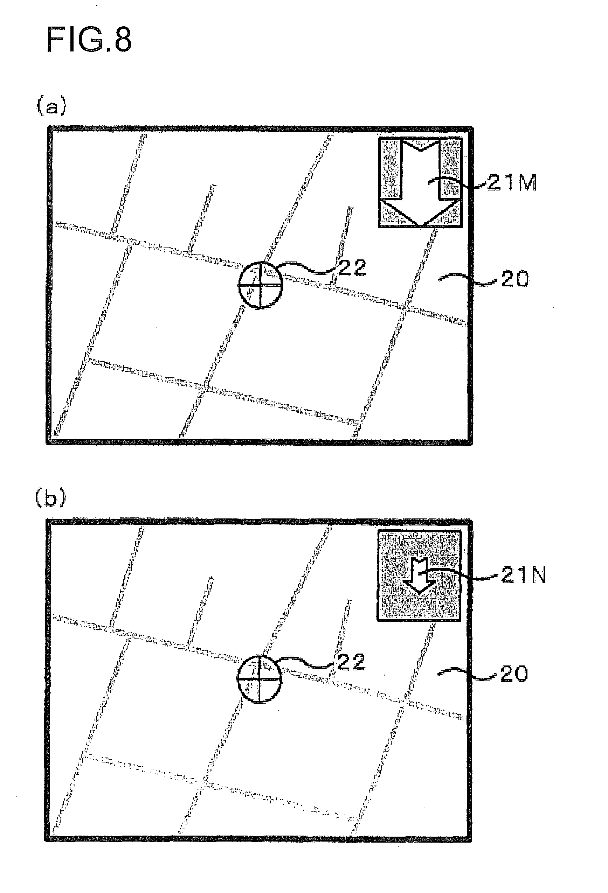

In addition, a large arrow 21M may be displayed to indicate the point-of-interest facility direction, as shown in FIG. 8(a), if the distance between the map center and the point-of-interest facility is significant, whereas a small arrow 21N may be displayed, as shown in FIG. 8(b) if the distance between the map center and the point-of-interest facility is small.

(5) In step S108 in FIG. 2, the specific category assigned to the particular point-of-interest facility for which the point-of-interest facility icon is to be displayed may be detected and the indicator display mode may be adjusted based upon the category thus detected. In this case, even better user convenience is assured since the user is able to ascertain in advance whether or not the point-of-interest facility icon corresponding to a desired category can be displayed by scrolling the map.

(6) The user may be allowed to specify the detection range determined in step S 102 in FIG. 2. In this case, too, better user convenience is assured since the user is able to choose whether to search for a point-of-interest facility, the point-of-interest facility icon corresponding to which can be brought up on display by scrolling the map by only a small extent, or to look for a point-of-interest facility, the point-of-interest facility icon corresponding to which can be brought up on display only if the map is scrolled by a significant extent. The user specifying the detection range may enter a specific distance from the map center via, for instance, the input device 18 and designate the range defined by the distance as the point-of-interest facility detection range.

(7) Once a first point-of-interest facility icon, among the point-of-interest facility icons indicated by the indicator, comes up on display, the indicator may be cleared even if the other icons have not yet come up on display. As an alternative, after one of the icons indicated by the indicator comes up on display, the indicator may remain on display as long as the other icons are yet to come up on display.

(8) As the operation is switched to a map indicator display processing execution mode while the mode for displaying point-of-interest facility icons on the map (icon display mode) is off, the icon display mode may be turned on. In addition, if the icon display mode is turned off while the map indicator display processing is in progress, the map indicator display processing may end.

The embodiment may be adopted in combination with a single variation or in combination with a plurality of variations. In addition, the variations described above may be adopted in any conceivable combination.

The embodiment described above simply represents an example and the present invention is not limited in any way whatsoever to the structural particulars of the embodiment.

### EXPLANATION OF SYMBOLS

- 1: navigation apparatus
- 11: control circuit
- 16: display monitor
- 19: touch panel
- 20: map
- 21A, 21C, 21D, 211, 21K, 21L: waves
- 21B, 21E to 21F, 21J, 21M, 21N: arrow
- 22: cursor
- 23a, 23b: point-of-interest facility icon

## Claims

1. A map display device, comprising:
a display monitor;
a map display control means for bringing up a map with an icon displayed therein at the display monitor and scrolling the map in response to a scroll instruction;
an icon detecting means for detecting an icon present in a specific area beyond a range of a display screen at the display monitor; and
an indicator display control means for displaying an indicator indicating a direction along which the map should be scrolled in order to bring up on display the icon detected by the icon detecting means.

2. A map display device according to claim 1, wherein:
the indicator display control means changes a display mode for the indicator based upon a quantity of icons detected by the icon detecting means.

3. A map display device according to claim 1, further comprising:
a distance calculating means for calculating a distance between a position at which the icon detected by the icon detecting means is displayed on a map and a predetermined position on the map currently on display at the display monitor, wherein:
the indicator display control means changes a display mode for the indicator based upon the distance calculated by the distance calculating means.

4. A map display device according to claim 1, wherein:
the icon detecting means comprises:
a range specifying means for specifying a range for the map; and
a calculating means for calculating, as the predetermined area, a difference between the range specified by the range specifying means and a map range over which the map is displayed on the display screen at the display monitor.

5. A map display device according to claim 1, wherein:
the indicator display control means changes a display mode for the indicator based upon a type of icon detected by the icon detecting means.
